# EUROPEAN PATENT APPLICATION

(11) **EP 2 537 660 A1**
(43) Date of publication of application: **26.12.2012**
(21) Application number: 12172076.7
(22) Date of filing: 14.06.2012
(51) Int. Cl.: B29C 45/44

(54) **Retractable core for molds for plastic material containers**

(30) Priority: 21.06.2011 IT PR20110057
(71) Applicant: Casone S.p.A., 43015 Noceto (IT)
(72) Inventor: Adami, Franco, 43015 NOCETO (PR) (IT)
(74) Representative: Dallaglio, Fabrizio

(57) **Abstract**

The present invention finds application in the field of injection molding of plastic materials within enclosed molds, in particular in the field of cores employed to obtain free spaces during melting, i.e., regions which are not to be filled with liquid plastic materials.

Shrinkable core (1) for plastic material container molds, comprises a plurality of movable sectors (3), and control means which impart motion to said sectors (3) and, then, a progressive compression on core (1) itself, when core (1) is to be extracted after molding of plastic material containers (100) with undercuts (101).

Said control means comprises:
gears (2), provided with alternating rotary motion, and able to move said sectors (3) towards and away from one another;
sector blocking means during the injection step.

## Description

The present invention finds application in the field of injection molding of plastic materials within enclosed molds, in particular in the field of cores employed to obtain free spaces during melting, i.e. regions which are not to be filled with liquid plastic materials.

As known, some types of containers carry, on the upper portion, a number of ribs to which the closing cover is attached.

As is known, this portion of the container is separately fabricated from with plastic material, and then welded to the container, or it is made of metallic material, and subsequently crimped to the container itself.

Said technique has always been used to overcome the problem of undercuts which obstruct removal of the container from the mold after molding.

The known technique already provides carrying out molding of containers having undercuts using cores comprising sectors, some of which being substantially bent tile-shaped and some others wedge-shaped, arranged close to one another to form a cylinder.

Said sectors, through a number of prismatic couplings, engage with a frusto-conical shaped pivot which, during the liquid plastic material injection step, is inserted between the sectors themselves.

It has to be highlighted that coupling between said pivot and the sectors take place via prismatic pairs, that is through translation of a slide within a guide. In fact, known art industries, in alternate fashion, present slides or guides that match with corresponding slides or guides located on the outer surface of the pivot, concentric therewith.

In practice, after molding a container, the core has to be removed from therein. To do so, the above mentioned pivot is withdrawn, which, due to the prismatic couplings with the sectors, drags them along. The frusto-conical shape of the pivot causes the sectors to shrink, during the withdrawal operation, following the external surface of the pivot itself, allowing the above mentioned removal.

Obviously, in these types of coupling, the slides are subjected to continuous translations within the guide. This results in wear and subsequent breaking of slides which, as already mentioned, are located both on the internal surface of the sectors and on the internal surface of the pivot, in a staggered manner.

Accordingly, a further disadvantage is that, even in case only one slide breaks, the whole device needs to be replaced, as it would no longer be able to shrink and then be extracted from within the molded container.

The object of the present invention is to overcome the above shortcomings by making available a shrinkable core which is able to create much larger undercuts with respect to those obtained with prior art devices, being able to shrink to a greater extent than known devices in virtue of employing gears having positive control cams, within which pins connected to sectors slide.

The shrinkable core for plastic material container molds according to the present invention exhibits a number of primary advantages.

First of all, as already said, it allows to obtain larger undercuts.

Further, it is less subjected to wear and fatigue breakings of the pins which slide within the cams with respect to slides in the guides, since, in the prior art core, high pressures are generated on the above mentioned slides.

To the above advantages, one has to add the fact that, because of the different configuration of the present device with respect to prior art devices, if breakage of one or more pins should occur, replacing only the damaged sector would be possible, unlike the prior art, wherein replacing the whole core is necessary.

Said objects and advantages are all achieved by the shrinkable core for plastic material container molds, object of the present invention, which is characterized by what set forth in the appended claims below.

This and other features will become more apparent from the following description of a preferred embodiment illustrated, merely by way of example and non-limiting, in the drawings of the pictures.

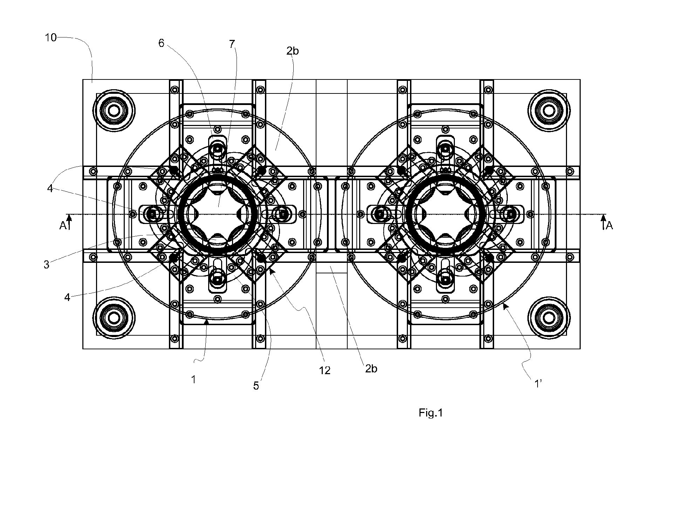

Figure 1: shows in a top view a mold, with two shrinkable cores, during the injection step of liquid plastic material according to the present invention;

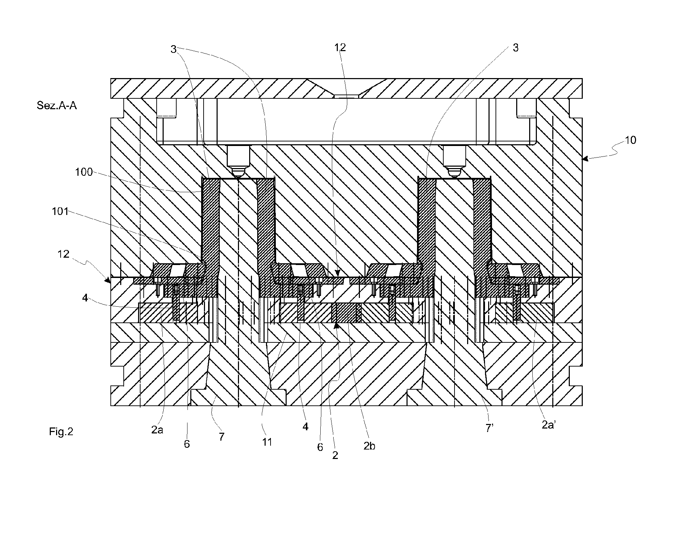

Figure 2: shows a sectional view of the mold in figure 1;
Figure 3: shows a top view of a mold having two devices according to the present invention, in the step following injection of liquid plastic material;
Figure 4: shows a sectional view of the mold in figure 3;
Figure 5: shows a perspective view of the present inventive device;

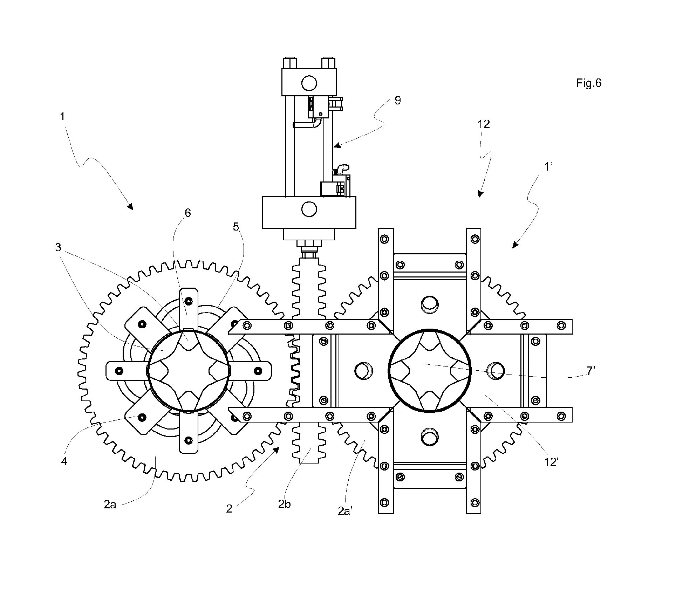

Figure 6: shows an elevation view of the core according to the present invention.

Particularly referring to the figures, a shrinkable core for molds 10 used in molding of plastic material containers 100 having undercuts 101 is indicated as a whole at 1.

Said shrinkable core 1 generally comprises a plurality of movable sectors 3 and control means which impart movement to said sectors 3 and, then, a progressive compression on the shrinkable core 1 itself, when core 1 is to be extracted after molding said containers 100 with undercuts 101.

The above control means, in turn, comprise:
gears 2 which, being provided with rotatory reciprocal motion, are able to move sectors 3 towards and away from one another;
sector blocking means which block said sectors 3 during the liquid plastic material injection step.

In the example shown in the figures, gears 2 consist of pinion 2a which is rotated by rack 2b with which it engages, in turn, driven by means 9 which, by way of example, are represented by a pneumatic or hydraulic cylinder.

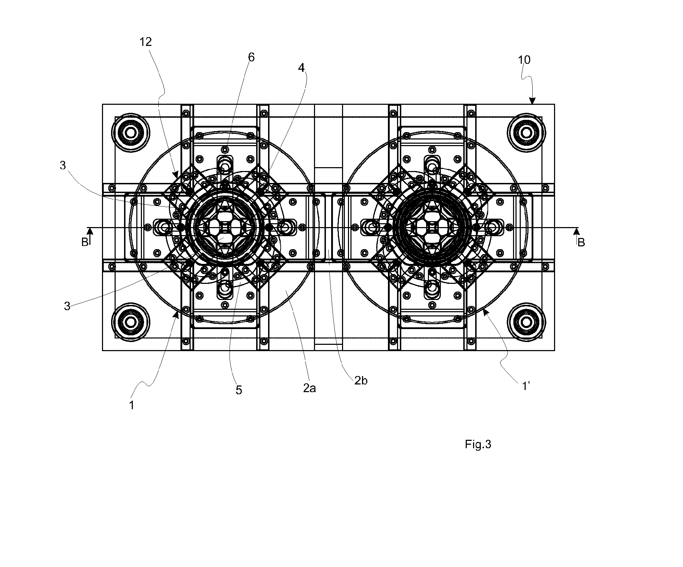

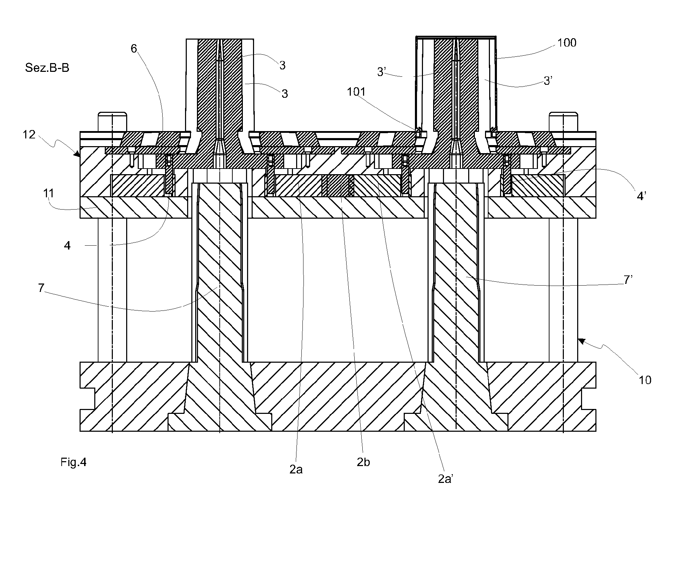

Said gears 2, as well seen in figure 3 and 4, are supported on a component 11 of mold 10.

Sectors blocking means consist of a pivot 7 which is able to move with reciprocating translatory motion along its own axis.

Operatively, said pivot 7, in the liquid plastic material injection step, by passing through a hole 8 formed in pinion 2a in the region of the axis of pinion 2a itself, is inserted between sectors 3, blocking them.

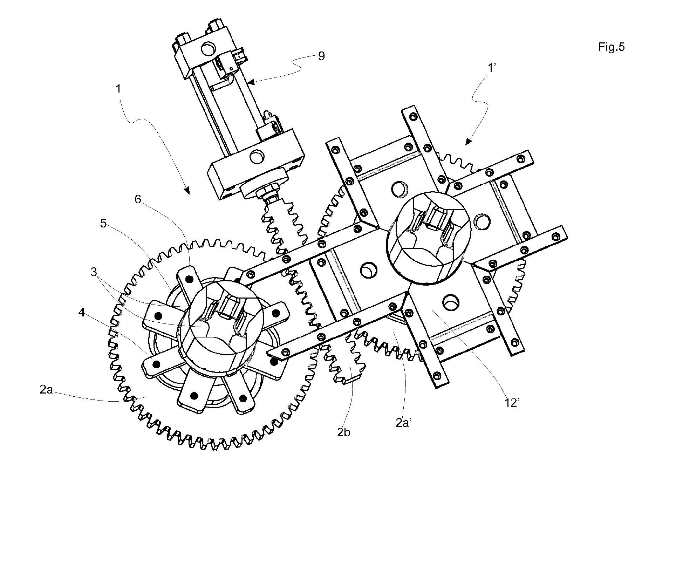

Substantially , said pivot 7 has an external surface exactly replicating the surface obtainable joining the same sectors 3 located on a circumference to form a cylinder (figure 5).

In accordance with the preferred embodiment illustrated in the appended figures, by way of simplifying and non-limiting example, sectors 3 have different shapes so that they can both match with one another and with the external surface of pivot (7). In particular, there are four of them, substantially bent tile-shaped, space apart by four substantially wedge shaped ones.

Each sector 3 ends, on the side from which pivot 7 is inserted, with a parallelepiped-shaped element 6, disposed orthogonally with respect to sector 3 itself.

In each of said elements 6, on the free end lower face, there is a pin 4 which engages, through matching shapes, corresponding cams 5 directly formed in pinion 2a (positive control cams).

A locking member, located over pinion 2a and having the dual function of holding pinion 2a itself in position and prevent sectors 3 from coming off pins 4 of cams 5, has been indicated at 12.

Operation of said device will now be described.

Initial configuration corresponds to free sectors 3, close to one another.

After inserting shrinkable core 1 within a mold, an operator actuates rack 2b driving it by means 9. Said rack 2b, by engaging pinion 2a, rotates it, accordingly, also bringing into rotation cams 5 formed therein.

This rotation by pins 4 is converted in a radial translation of sectors 3 corresponding to moving the sectors themselves away from each other.

Between said sectors 3, once disposed forming a cylinder, pivot 7 is inserted, which serves as blocking means for the sectors 3 during the injection step of liquid material.

Once molding is completed, pivot 7 is removed, leaving sectors 3 free to move.

The operator, then, actuates rack 2b imparting it a motion opposite to the previous one. This way, pinion 2a rotates opposite to the preceding direction, causing said sectors 3 to approach each other to an extent that allows core 1 to be extracted from molded container 100.

In the depicted example, mold 10 and shrinkable core 1 are disposed such that opening of mold 10 and alternating translation of pivot 7 take place along a vertical direction. Nevertheless, the device according to the present invention can be arranged to have a horizontal deployment, without departing, however, from the scope of the invention defined in the appended claims below, thus, being easily suitable for prior art horizontal molding plants.

To be noted that, in the attached figures, two shrinkable cores 1 are shown for a mold 10. In particular, core 1 is provided with both gears 2, that is both pinion 2a and rack 2b, core 1' having pinion 2a' only, which engages rack 2b of core 1.

Obviously, the solution of this embodiment is carried out to fulfill and enhance throughput (meaning the number molded containers 10) of molding systems incorporating the shrinkable core 1 for plastic material container molds.

Likewise, those skilled in the art, in order to meet varying and specific requirements, will obviously be able to make a number of modifications and variants, yet, all within the scope of the invention, as defined in the following claims.

## Claims

1. Shrinkable core (1) for plastic material container molds, of the type comprising a plurality of movable sectors (3) and control means which impart motion to said sectors (3) and, then a progressive compression on core (1) itself, when core (1) is to be extracted after molding plastic material containers (100) with undercuts (101), **characterized by** said control means comprising:
gears (2), provided with alternating rotary motion, and able to move said sectors (3) towards and away from each other;
sector blocking means during the injection step, which are comprised of a pivot (7) which moves with alternating rectilinear motion and is inserted between sectors (3), disposed on a circumference, during the injection step; said pivot (7) having an outer surface exactly following the surface obtainable by joining sectors (3).

2. Shrinkable core (1) according to claim 1, **characterized by** sectors (3) each comprising a parallelepiped-shaped element (6), disposed orthogonally to sectors (3) themselves, having on the lower face of the free end at least a pin (4).

3. Shrinkable core (1) according to claim 1, **characterized by** gears (2) consisting of at least one pinion (2a) which engages with at least one rack (2b); said pinion (2a) having a central hole (8) to allow passage of pivot (7), and being rotated by rack (2b), in turn, driven by means (9).

4. Shrinkable core (1) according to claims 1 and 2, **characterized by** each pin (4) engaging with corresponding cams (5), respectively; said cams (5) being directly formed in pinion (2a).

5. Shrinkable core (1) according to claim 1 and 2, **characterized by** means (9) consisting of a pneumatic or hydraulic cylinder.
